# EUROPEAN PATENT APPLICATION

(11) **EP 4 844 630 A2**
(43) Date of publication of application: **25.11.2026**
(21) Application number: 26171641.9
(22) Date of filing: 10.04.2026
(51) Int. Cl.: G06K 7/10

(54) **METHODS AND SYSTEMS OF IMPLEMENTING OPTIMAL SCANNING SEQUENCES AT READER DEVICES FOR READER DEVICE COORDINATION**

(30) Priority: 15.04.2025 US 202519179915
(71) Applicant: T MOBILE INNOVATIONS LLC, Overland Park KS 66251-2100 (US)
(72) Inventor: SATAPATHY, Durga, Ashburn, 20148 (US)
(74) Representative: Suddaby, Mark Edward

(57) **Abstract**

A method comprises obtaining, by a controller application executed at a controller system (103), layout data (153) describing locations of one or more reader devices (112 A-E) in an inventory environment (106), determining, by the controller application, a scanning sequence of the one or more reader devices based on the layout data and a scanning rule, wherein the scanning sequence defines a time frame at which each of the one or more reader devices is to scan an area (110), and wherein the scanning rule includes one or more conditions associated with the one or more reader devices that, when satisfied, defines the scanning sequence of the one or more reader devices, and instructing, by the controller application, each of the one or more reader devices to scan respective read zones (202 A-B) in the area according to the scanning sequence to receive signals from a plurality of tags (115) and determine inventory data describing the tags.

## Description

### CROSS-REFERENCE TO RELATED APPLICATIONS

### STATEMENT REGARDING FEDERALLY SPONSORED RESEARCH OR DEVELOPMENT

### REFERENCE TO A MICROFICHE APPENDIX

### BACKGROUND

Modern inventory environments (e.g., warehouses and retail stores) may store items on behalf of various customers/business enterprises. Each item may be coupled to one or more tags, such as a Radio Frequency Identification (RFID) tag. Antenna systems and/or reader devices may be positioned throughout the inventory environment. RFID tags may include various components, such as, for example, an integrated circuit for storing and processing information, an antenna for communicating signals, etc. For example, the integrated circuit may include memory for storing tag data (e.g., a unique identifier), a modulator for modulating signals, and circuitry for power management. The RFID tag may receive signals from antenna systems/reader devices, obtain power from the received signals, and transmit responses back to the reader devices.

### SUMMARY

In an embodiment, a method of optimal scanning sequence configuration at reader devices for reader device coordination is disclosed. The method comprises obtaining, by a controller application executing at a controller system, layout data describing a location of a plurality of reader devices in an inventory environment, and determining, by the controller application, key performance indicator data associated with each of the reader devices, in which the key performance indicator data comprises metrics evaluating at least one of an accuracy of inventory scans performed by each of the reader devices or an interference level experienced in signals received by each of the reader devices. The method further comprises determining, by the controller application, a profile associated with the signals received by each of the reader devices from one or more tags, in which the profile defines a set of parameters describing the signals received by each of the reader devices, and identifying, by the controller application, a scanning policy for a reader device of the reader devices based on at least one of the layout data, the key performance indicator data, and the profile of each of the reader devices, in which the scanning policy indicates a purpose for scanning and one or more scanning rules used to define a scanning sequence for the reader devices. The method further comprises determining, by the controller application, the scanning sequence for the reader devices based on the scanning policy and at least one of the layout data, the key performance indicator data, and the profile of each of the reader devices, and instructing, by the controller application, each of the reader devices to scan respective areas in the inventory environment according to the scanning sequence.

In another embodiment, an inventory system comprises a reader device and a controller system. The reader device comprises a first application stored in a memory of the reader device, and the controller system comprises a controller application stored in a memory of the controller system. The first application, when executed by a processor of the reader device, causes the first application to be configured to scan an area in an inventory environment, receive signals carrying tag data from a plurality of tags in the area, and forward the tag data and signal metadata describing the signals to the controller system. The controller application, when executed by a processor of the controller system, causes the controller application to be configured to determine layout data including a location of the reader device and other reader devices in the inventory environment, identify a scanning policy for the reader device based on the layout data and key performance indicator data determined based on the signal metadata and the tag data received from the reader device, determine the scanning sequence for the reader device and the other reader devices based on the scanning policy, and instruct the reader device and the other reader devices to scan respective areas in the inventory environment according to the scanning sequence. The scanning policy defines a scanning sequence for the reader device relative to the other reader devices based on one or more conditions associated with the layout data and the key performance indicator data.

In yet another embodiment, method comprises obtaining, by a controller application executed at a controller system, layout data describing locations of one or more reader devices in an inventory environment, determining, by the controller application, a scanning sequence of the one or more reader devices based on the layout data and a scanning rule, in which the scanning sequence defines a time frame at which each of the one or more reader devices is to scan an area, and the scanning rule includes one or more conditions associated with the one or more reader devices that, when satisfied, defines the scanning sequence of the one or more reader devices, and instructing, by the controller application, each of the one or more reader devices to scan respective read zones in the area according to the scanning sequence to receive signals from a plurality of tags and determine inventory data describing the tags.

These and other features will be more clearly understood from the following detailed description taken in conjunction with the accompanying drawings and claims.

### BRIEF DESCRIPTION OF THE DRAWINGS

For a more complete understanding of the present disclosure, reference is now made to the following brief description, taken in connection with the accompanying drawings and detailed description, wherein like reference numerals represent like parts.
FIG. 1 is a block diagram of a communication network including an inventory system for optimal scanning sequence configuration at reader devices for reader device coordination according to various embodiments of the disclosure.
FIG. 2A is a diagram illustrating a scanning sequence configuration of fixed position reader devices in the inventory system of FIG. 1 according to various embodiments of the disclosure.
FIG. 2B is a diagram illustrating a scanning sequence configuration of mobile reader devices in the inventory system of FIG. 1 according to various embodiments of the disclosure.
FIG. 3 is a diagram illustrating a scanning sequence configuration for the purpose of tag positioning of a tag in the inventory system of FIG. 1 according to various embodiments of the disclosure.
FIG. 4 is a diagram illustrating a scanning sequence configuration for the purpose of reader device capability optimization in the inventory system of FIG. 1 according to various embodiments of the disclosure.
FIG. 5 is a flowchart illustrating a first method for optimal scanning sequence configuration at reader devices using the inventory system of FIG. 1 according to various embodiments of the disclosure.
FIG. 6 is a flowchart illustrating a second method for optimal scanning sequence configuration at reader devices using the inventory system of FIG. 1 according to various embodiments of the disclosure.
FIG. 7 is a block diagram of a computer system implemented within the communication network of FIG. 1 according to an embodiment of the disclosure.

### DETAILED DESCRIPTION

It should be understood at the outset that although illustrative implementations of one or more embodiments are illustrated below, the disclosed systems and methods may be implemented using any number of techniques, whether currently known or not yet in existence. The disclosure should in no way be limited to the illustrative implementations, drawings, and techniques illustrated below, but may be modified within the scope of the appended claims along with their full scope of equivalents.

RFID reader devices (also referred to herein as "reader devices") operate by emitting radio frequency signals to communicate with RFID tags (also referred to herein as "tags") attached to items in an inventory environment, such as a warehouse or retail store. The antennas may be included as part of the reader device or may be separate from the reader device (but proximate enough to communicate with tags in the read zone of the reader device).

The types of tags in the inventory environment may vary widely based on various factors, including frequency, functionality, power source, communication capabilities, etc. For example, different tags may operate at different frequencies, affecting the read zone, interference susceptibility, and use cases of the tags (e.g., low frequency tags, high frequency tags, ultra-high frequency tags, millimeter wave (mmWave) frequency tags, etc.). Tags may be powered in different ways, affecting their ability to transmit data (e.g., passive tags with no internal power source and active tags with an internal battery). Some tags may have different ways of responding to reader device signals (e.g., read only tags, read-write tags, etc.), include different security mechanisms for authenticated or encrypted communications, be embodied in different physical forms, etc. Moreover, some items may be coupled to multiple tags, each having different purposes (e.g., one tag for product identification, another for tracking shipment status, a third for authentication, etc.). In some cases, a single item having multiple tags may cause signal collisions when multiple tags communicate simultaneously over the same frequency channel. Therefore, tags can vary in frequency, power source, communication type, security level, and physical form, each suited for different inventory tracking needs.

Just as tags can vary in design and function, reader devices also differ in capabilities, placement, and environment factors that may impact their ability to detect and communicate with tags. The effectiveness of a reader device depends on several factors, which influence the coverage area, signal strength, and ability to handle diverse inventory conditions. For example, reader devices may operate across different frequency bands as well, affecting the range, penetration, and interference susceptibility of the reader devices. Reader device performance may be influenced by power levels, which determine how far and effectively the reader may interrogate tags (e.g., low power reader devices may be limited to shorter read zones but offer mobility, high power fixed readers may increase interrogation range but are fixed, etc.). Where a reader is positioned also affects the signal reliability and inventory detection capabilities (e.g., high density tag environments may have to use reader devices capable of handling tag collisions, indoor readers may have different structural requirements than outdoor reader devices, complex physical environments (with scaffolding, water, metals, etc.) may cause interference, absorption, and radio dead zones, etc.). Therefore, reader devices also vary in capabilities and are heavily affected by placement environments in which the reader devices are positioned.

Despite the fact that reader devices and tags used in inventory environments vary greatly in attributes, capabilities, and environments, reader devices do not operate in a coordinative or collaborative manner to optimize scanning of the different types of tags in an environment based on the capabilities of the reader devices or the placement environment of the reader devices. Instead, reader devices in an inventory environment frequently operate one at a time, based on a pre-configured schedule (e.g., simple rotation schedule), in some instances all at once on an overall trigger, or in many instances each on their own independent schedules without consideration of potential other devices in the environment. For example, the pre-configured schedule may be to avoid interference that may otherwise result when multiple adjacent/neighboring reader devices communicate simultaneously. However, no other factors may be considered, leading to largely ineffective and inefficient uses of highly capable reader devices in inventory environments. For example, the pre-configured schedule may result in low signal coverage in an inventory environment, and sometimes the detection of inaccurate inventory data (i.e., not all tags may be detected due to the sub-optimal use of the reader devices).

The present disclosure addresses the foregoing technical problems by providing a technical solution in the technical field of inventory management and precision tracking of tags, by dynamically configuring reader devices to operate according to a scanning sequence to optimize reader device deployment. The scanning sequence may refer to a schedule or plan dictating when and how (e.g., frequency band/channel, power level, etc.) each of the reader devices operate within an inventory environment to optimize scanning efficiencies, minimize interference, and ensure comprehensive tag detection. The use of the scanning schedule defining a sequence of reader device scans in the inventory environment may optimize reader device employment, ensuring maximum coverage, minimized signal loss, and seamless tracking of assets across the supply chain.

The inventory system disclosed herein includes the tags (e.g., RFID tags) positioned on items in an inventory environment (e.g., a retail store and warehouse), reader devices positioned within the inventory environment, and a controller system positioned within or external to the inventory environment. In some cases, more than one tag may be positioned on a single item (e.g., certain items of a predefined type - high value items, high security items, protected items, historical items, etc. - may include both ultra-high frequency tags and a mmWave tag). One or more of the reader devices may support (be capable of communicating over) multiple different frequencies (e.g., low frequency, high frequency, mmWave, etc). The controller system may include a controller application that receives the data from the reader devices, determines a scanning schedule for the reader devices, and transmits an instruction to the reader devices to scan the inventory environment according to the scanning schedule.

In an embodiment, a reader device may first obtain layout data of the inventory environment. The layout data may include data describing the locations, angles, orientations, and capabilities of each of the reader devices in the inventory environment. The layout data may also include distance data indicating distances between each of the reader devices. The layout data describing the reader devices may change over time when the reader devices are mobile or sometimes robotically controlled. The layout data may also indicate the tags identified in the read zones (or coverage areas) of each of the reader devices (although the location of these tags may change over time when the tags are mobile).

The controller system and/or reader device may obtain the layout data in various manners. For example, each of the reader devices may perform an initial scan of an area in the inventory environment to obtain an inventory of the tags in the area of the inventory environment (e.g., receive an indication/identification of the tags that are in the area). The initial scan may be over a predefined frequency (e.g., the reader device may transmit interrogation signals into the area over a low frequency or a high frequency), which may trigger the tags capable of receiving the low/high frequency interrogation signals to respond with tag data.

In some case, the reader device may store reader location data describing the location, angle, orientation, and/or other attribute of the reader device. The reader device may transmit, to the controller system, the reader location data (if available) with the received tag data and signal metadata describing the signals over which the tag data was received. A controller application executing at the controller system may receive and store this layout data, tag data, and signal metadata. As another example, technicians may physically measure or record locations and orientations of each reader device and antenna (sometimes referencing floor plans or building blueprints) and store this data as the reader location data at the reader device. As another example, mobile robots and/or drones with communication capabilities may traverse the inventory environment detecting the reader device locations/angles/orientations, and updating the controller system with this layout data. As yet another example, reader devices may include onboard sensors that may detect movement or orientation changes, and automatically trigger an update to the layout data, which may then be sent to the controller system.

As mentioned above, reader devices may be at fixed locations in the inventory environment or may be mobile within the inventory environment. Similarly, tags and attached items may also be mobile within the inventory environment. The controller system may periodically obtain updated layout data (e.g., based on a schedule or a trigger event). For example, when a reader device changes location, the reader device may transmit updated location data to the controller system. In this way, the controller system may maintain an up-to-date version of the layout data, describing the positioning of the reader devices within the inventory environment.

In some embodiments, the controller application may determine key performance indicator (KPI) data for each of the reader devices. A KPI may refer to a metric evaluating the performance of a reader device across different capabilities (e.g., frequencies) supported by the reader device. For example, suppose a reader device is capable of supporting a low frequency band (e.g., 30 kHz to 300 kHz), mid-frequency band (3 MHz to 300 MHz), high frequency band (300 MHz to 3 GHz), and a mmWave frequency band 24 GHz to 300 GHz (although it should be appreciated that reader devices may support any number of frequencies). The controller system may maintain KPI data describing the performance of each of the different supported frequencies according to various KPI parameters (e.g., an inventory parameter, a positioning parameter, and an interference parameter). For example, the inventory parameter may define the frequency operated by the reader device that provides the most accurate inventory data, the positioning parameter may define the frequency operated by the reader device that provides the most accurate tag positioning, and the interference parameter may define the frequency operated by the reader device that provides the lowest level of signal interference. The KPI data may similarly describe the performance of the reader devices at different power levels, and other capabilities of the reader devices, to define the most optimal power level and other capabilities for various KPI parameters. KPI data is further described in U.S. Pat. App. No.19/178,537 entitled "Methods and Systems of Optimal Frequency Configuration at Reader Devices for Reader Device Coordination," by Durga Satapathy, the entirety of which is incorporated by reference herein its entirety.

In some embodiments, the controller application may also generate profiles associated with the signals received at each of the reader devices. A profile may refer to a dataset that captures unique operational characteristics and behavioral patterns of reader devices and tags within the inventory environment. A profile of a reader device may include, in some cases, the KPI data, read success rates, interference levels, scanning efficiency metrics, latencies, signal strengths, time of arrival (ToA), angle of arrival (AoA), modulation characteristics, etc., describing signals received by reader devices. For example, a profile of a reader device may indicate latencies experienced while receiving tag data from tags (e.g., determined by the controller application based on the ToA carried in the signal metadata), the strength and quality of the signals received at the reader devices, etc. The profile of a detected tag may indicate, for example, frequencies supported by the tag, communications and processing capabilities of the tag, collision behavior of the tag, mobility status (static versus mobile), location data of the tag, security features of the tag, other tags positioned on the same item as the tag, etc.

As described herein, the controller application may optimize system-wide performance based on the KPI data and profiles by implementing adaptive scheduling strategies to enhance inventory visibility and tracking accuracy while maintaining interference and blind spots. To this end, the controller system may also maintain predefined scanning policies applicable to one or more reader devices, for example, based on layout data, KPI data, and/or profiles. The scanning policy may define the scanning sequence for a given set of reader devices in the inventory environment based on a purpose of the scan (as described in purpose data) and one or more scanning rules. The purpose data may define a goal or objective of a scan that is to be performed by the set of reader devices, and the scanning sequence may be determined to optimize the sequence of scanning across the set of reader devices to accomplish the goal or objective. For example, the purpose data may indicate that the scan is to minimize interference, maximize tag positioning accuracy, and/or optimize scanning by the reader device. The scanning rule may be a predefined set of conditions dictating when, how (e.g., frequency channel setting, power level setting, etc.), and under what parameters a reader device scans for tags within an inventory environment. The scanning rule may be based on the layout data, KPI data, and/or profiles described above.

For example, when the purpose data indicates a purpose of minimizing interference, a scanning rule in the scanning policy may apply to reader devices when the layout data of the reader devices meets the condition that at least two readers are adjacent or within a predefined distance from one another. When this condition is met, the scanning rule may include logic or code to define that the two reader devices may not operate on the same frequency channel at the same time. The controller application may then use the scanning rule of the scanning policy to determine a scanning sequence for the reader devices based on the purpose of minimizing interference.

For example, the scanning sequence may indicate a first, eastern-most reader device transmits first interrogation signals over a first frequency channel within a frequency band at a first time, a second, middle reader device transmits second interrogation signals over a second frequency channel within the frequency band at the first time, a third, also middle reader device transmits third interrogation signals over a third frequency channel within the frequency band at the first time, and a fourth, western-most reader device transmits first interrogation signals over the first frequency channel within the frequency band at the first time. This scanning sequence may optimize the scanning of tags while minimizing interference across the four reader devices, and the first and fourth reader device may be far enough away from each other (greater than a predefined distance) such that the use of the same first frequency channel at the fourth reader device may not cause interference with the first reader device. The scanning sequence may be even further refined to ensure that the first, second, third, and fourth reader devices all perform scans at different times, to further reduce interference levels between the scans.

As another example, when the purpose data indicates a purpose of maximizing tag positioning accuracy, a scanning rule in the scanning policy may be based on the layout data and the KPI data. The scanning rule may indicate that multiple adjacent reader devices that are angled/oriented to the same area of a target tag (as indicated in the layout data) are to scan the area of the target tag over the same frequency channel at the same time. Unlike the example above in which the adjacent reader devices are not to communicate over the same frequency channel, when performing tag positioning the adjacent reader devices may have to communicate over the same frequency channel to ensure consistent signal propagation characteristics, minimizing variability caused by frequency-dependent interference, reflection, or absorption. The scanning rule may further specify the frequency channel to use for communication based on the KPI data, specifically the positioning parameter defining the optimal frequency channels to use at the reader devices for tag positioning. The scanning rule may be used to determine the scanning sequence, defining the time and the frequency channel over which all three reader devices are to scan the area to detect the tag, for the controller application to perform tag positioning on the tag.

As yet another example, when the purpose data indicates a purpose of scanning optimization, the scanning rule in the scanning policy may be based on the layout data and the profiles maintained at the controller system. The scanning rule may instruct the controller application to determine the scanning sequence of the reader devices based on the profiles describing attributes of signals received from the reader devices. For example, a profile of a first reader device may indicate a higher latency compared to a profile of a second reader device. In this case, the scanning sequence may schedule the first reader device to scan the area first, allowing the first reader device more time to obtain tag data from the tags in the area. Suppose a profile indicates that a reader device is scanning an area with intelligent tags that can communicate data or can perform different types of processing (e.g., only respond to interrogation signals carrying certain codes). In this case, the scanning sequence may schedule this reader device to have more time to perform the scan, allowing for the tags to perform the capable communications and processing.

Once the scanning sequence is determined using the scanning policy with the defined purpose and the scanning rules, the controller application may transmit an instruction to the reader devices with the scanning sequence. For example, the scanning sequence may include identifiers of reader devices and the times, frequency channels/bands, power levels, and other settings over which the reader device is to scan an area. The reader device may be programmed to evaluate the scanning sequence, determine when the reader device is to perform the scan and the parameters/settings to adjust to perform the scan, and perform the scan accordingly (otherwise the reader device may ignore the details in the scanning sequence related to other reader devices).

Accordingly, the embodiments disclosed herein enable reader devices to scan areas of the inventory environment according to the most optimal scanning sequences, based on an evaluation of the signals and data received from the tags, the capabilities of the reader devices, and environments around the reader devices. Therefore, the embodiments disclosed herein enable a more efficient use of the resources in the inventory system to more accurately identify and read tags in the inventory environment, thereby increasing inventory system efficiency and capacity.

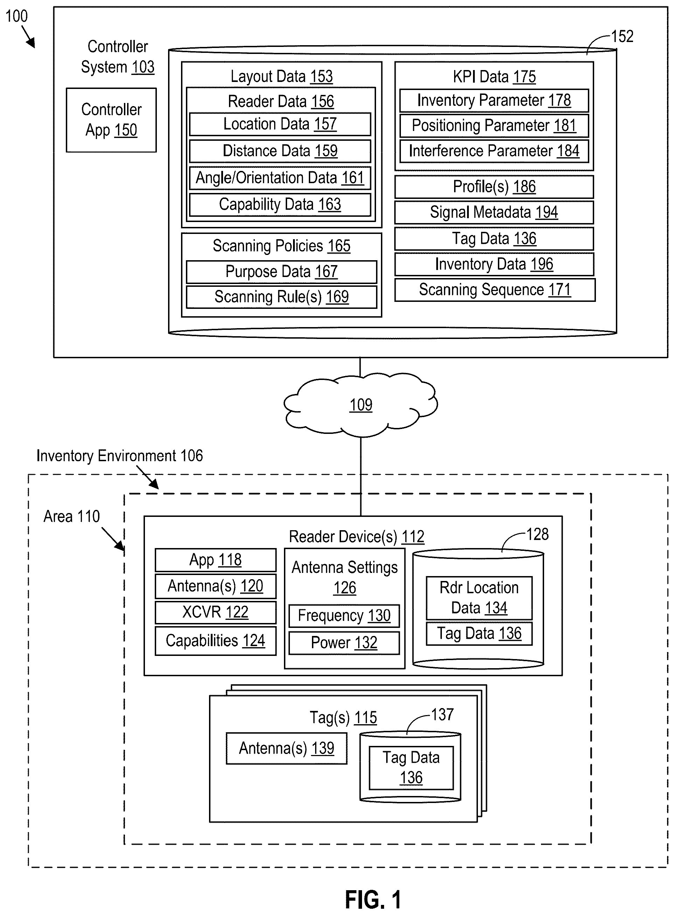

Turning now to FIG. 1, a communication network 100 is described. The communication network 100 includes a controller system 103, an inventory environment 106, and a network 109. The inventory environment 106 includes one or more reader devices 112 and one or more tags 115. The network 109 may be one or more private networks, one or more public networks, or a combination thereof. While the controller system 103 is shown in FIG. 1 as being separate from network 109, in some embodiments, it should be appreciated that the controller system 103 may be part of the network 109. In the embodiment shown in FIG. 1, an inventory system may include the controller system 103, the reader devices 112, and the tags 115.

The tags 115 may each be small devices used in inventory systems to store and transmit data wirelessly to reader devices 112. The tags 115 may each be coupled to (e.g., affixed to) different items and thus may be used for tracking and identifying the items, enabling efficient inventory management and asset tracking in various inventory environments 106 (e.g., warehouses, retail stores, centers, etc.). Each of the tags 115 includes a microchip (e.g., an integrated circuit with processing and memory resources) for data storage and processing, one or more memories, and one or more antennas for communication.

As mentioned above, the types of tags 115, supported frequencies, functionalities, communication capabilities and protocol, and general capabilities of the tags 115 may vary across the tags 115 in the inventory environment 106. For example, one or more of the tags 115 may include ultra-high frequency (UHF) tags that may operate in a first frequency range. For example, UHF tags may operate in a frequency range of 600 MHz to 3 GHz, or over an 860-960 MHz frequency band. One or more of the tags 115 may include mmWave tags, operating at much higher frequencies (e.g., between 24 GHz and 300 GHz). For example, the mmWave tags may operate over a 47 GHz frequency channel. One or more of the tags 115 may operate over low frequency bands (e.g., operating over 30-300 kHz), mid-frequency bands (3 MHz to 300 MHz), high frequency bands (e.g., 3-30 MHz), etc. As should be appreciated, the tags 115 may operate over any frequency, which is not limited herein. Some of the tags 115 may have different communication and processing capabilities, etc.

As shown in FIG. 1, the tags 115 include an antenna 139 and a data store 137. The antenna 139 may be configured to capture and transmit radio signals over the supported frequency, enabling communication and efficient data transfer. The data store 137 may store tag data 136. The tag data 136 may include a variety of data, such as, for example, a tag identifier (e.g., a unique serial number or electronic product code (EPC) distinguishing different tags 115 from one another), item information (e.g., data about the item to which the tag 115 is attached), manufacturer or supplier information about the item, logistics data, usage data (e.g., records and when and where the tag 115 has been scanned), etc. In some cases, the data store 137 may also store a code. The tag 115 may be capable of evaluating the interrogation signals received from a reader device 112 to determine whether the interrogation signals carry the code stored at the data store 137. The tag 115 may only respond to certain interrogation signals when the signals carry the code.

The reader devices 112 may each be electronic devices or computer systems. The reader devices 112 may include an application 118, an antenna 120, a radio transceiver 122 (shown as "XCVR 122" in FIG. 1), capabilities 124, antenna settings 126, and a data store 128 (e.g., one or more memories). The application 118 may be instructions stored on a memory of the reader device 112, which when executed by a processor of the reader device, causes the reader device 112 to perform the operations disclosed herein. The antenna 120 is configured to transmit interrogation signals to the tags 115 (in some cases, according to a scanning schedule) and receive response signals back from the tags 115. The interrogation signals serve to both power the tags 115 and trigger the tags 115 to respond to the signal with at least a portion of the respective tag data 136. The radio transceiver 122 may include radio equipment enabling the reader device 112 to communicate with other devices in the inventory environment 106 and/or to the controller system 103 over the network 109. In some cases, the reader devices 112 may also include other communication equipment enabling the reader devices 112 to communicate with the tags 115 over various different supported frequencies.

The reader devices 112 may be devices that are capable of communicating with tags 115 over one or more different frequencies (sometimes referred to herein as "supported frequencies" or "frequencies supported by the reader device 112") at different power levels, based on different configurations and communication protocols. To this end, the capabilities 124 may refer to the various supported capabilities of the reader device 112. For example, the capabilities 124 may indicate the supported frequencies of the reader device 112 (e.g., the frequency bands, sub-bands, channels, etc., over which the reader device 112 is capable of communicating). For example, the capabilities 124 of the reader device 112 discussed in the example above may include low frequency, mid-frequency, high frequency, and mmWave frequency bands, meaning the reader device 112 is capable of communicating signals over low frequency, mid-frequency, high frequency, and mmWave frequency bands. The capabilities 124 may include the maximum and/or adjustable power levels of the reader device 112 (e.g., which may affect read distances and signal penetration). The capabilities 124 may include a number and configuration of antenna ports and configurations (e.g., antenna switching capabilities and beam-steering functionalities). The capabilities 124 may include modulation and encoding supported at the reader device 112, supported interrogation protocols, read and write functionalities, communication interfaces, security features, adaptive frequency management, storage, sensors, etc.

The antenna settings 126 may refer to the settings of the antenna 120 which the reader device 112 uses to communicate with the tags 115. The antenna settings 126 may include the currently transmission frequency 130, which may refer to the frequency band/channel currently configured at the reader device 112 for communicating with the tags 115. The antenna settings 126 may also include power settings 132 (shown in FIG. 1 as "power 132"), which may indicate the amount of transmit power or energy emitted by the antenna 120 to communicate with the tags 115.

The data store 128 may store reader location data 134 and tag data 136. The reader location data 134 may refer to the location, orientation, and/or angle of the reader device 112, which in some cases may be detected by the reader device 112 (e.g., using a Global Positioning System (GPS) receiver or other sensor) and/or may be input by an operator of the reader device 112. The location data 157 may be in the form of, for example, GPS coordinates, latitude and longitude coordinates, geohash locations, cell identifiers, tracking area codes (TACs), location area codes (LACs), grid-based on hexagonal system-based data, relative locations, indexed location tags. The tag data 136 may include the tag data received from each tag 115.

As shown in FIG. 1, one or more reader devices 112 and one or more tags 115 (coupled to items) may be positioned within an area 110 of the inventory environment 106. The area 110 of the inventory environment 106 may refer to a zone or region of the inventory environment 106 within which the reader devices 112 may have range. In one case, the area 110 may refer to a read zone of the reader device 112 operating at a particular frequency 130 and/or power level. In other cases, the read zone of the reader device 112 operating at a particular frequency 130 may refer to a portion of the area 110, and/or at least a portion of the read zone may overlap with the area 110.

The controller system 103 may be a device, UE, computer, or computer system, with various types of resources that may be interworked to control the operations of the reader devices 112 to maintain accurate data regarding tags 115 in the inventory environment 106. The controller system 103 may include a processor, a memory, a radio transceiver, and other hardware or software components depending on the type of computer system running the controller system 103. The controller system 103 may include a controller application 150, which may include instructions stored on a memory of the controller system 103 and executable by a processor of the controller system 103. The controller application 150 may communicate with the reader devices 112, as further disclosed herein. For example, controller application 150 may programmatically evaluate the data received from the reader device 112 to determine the layout data 153, KPI data 175, and profiles 186, and to determine a scanning sequence 171, as further described herein.

The controller system 103 may also include a data store 152 (e.g., one or more memories, distributed or co-located). The data store 152 may store layout data 153, scanning policies 165, KPI data 175, profiles 186, signal metadata 194, the tag data 136 received from different reader devices 112, inventory data 196, and the determined scanning sequence 171. The layout data 153 may include reader data 156 describing each of the reader devices 112 in the inventory environment 106. The reader device 112 may include location data 157, distance data 159, angle and orientation data 161, and capability data 163. The location data 157 may describe a location of the reader device 112 (similar to the reader location data 134). The distance data 159 may indicate distances between each of the different reader devices 112. The angle and orientation data 161 may describe the angles and/or orientations of the reader device 112. The capability data 163 may describe various capabilities of the reader device 112 (similar to the capabilities 124). The layout data 153 describing the reader devices 112 may change over time when the reader devices 112 are mobile or sometimes robotically controlled. The layout data 153 may also indicate read zones of the reader devices 112, and the tags 115 identified in the read zones (or coverage areas) of each of the reader devices 112 (although the location of these tags 115 may change over time when the tags 115 are mobile).

The scanning policies 165 may refer to predefined logic or code that may include certain conditions that are used by the controller application 150 to generate a scanning sequence 171 for a given set of reader devices 112. Each scanning policy 165 may be associated with purpose data 167 and one or more scanning rules 169, such that the scanning policy 165 defines the scanning sequence 171 based on the purpose data 167 and the scanning rules 169. The purpose data 167 may define a goal or objective of a scan that is to be performed by the set of reader devices 112, and the scanning sequence 171 may be determined to optimize the sequence of scanning across the set of reader devices 112 to accomplish the goal or objective. For example, the purpose data 167 may indicate that the scan is to minimize interference, maximize tag positioning accuracy, and/or optimize scanning by the reader device. The scanning rule 169 may be logic or code defining a predefined set of conditions that dictate when, how (e.g., frequency channel setting, power level setting, etc.), and under what parameters a reader device 112 scans for tags 115 within the area 110. The scanning rule 169 may be based on the layout data 153, KPI data 175, and/or profiles 186.

The KPI data 175 may include KPIs or metrics evaluating a performance of the reader device 112 over each of the supported frequencies of the reader device 112, each of the supported power levels, and/or each of the different capabilities 124 of the reader device 112. For example, the KPI data 175 may include an inventory parameter 178, a positioning parameter 181, an interference parameter 184, and/or any other parameter defining a KPI of the reader device 112. The inventory parameter 178 may be a value describing an accuracy of the inventory data received at each frequency/capability 124 supported by the reader device 112. The positioning parameter 181 may be a value describing an accuracy of a determined location of each of the tags 115, calculated for example based on the signal metadata of the signals over which the tag data 136 was received at each frequency/capability 124 supported by the reader device 112. The interference parameter 184 may be a value describing a level of interference from other signals detected at the reader device 112 in a signal received from tags 115.

The profiles 186 may refer to a dataset that captures unique operational characteristics and behavioral patterns of reader devices 112 and tags 115 within the inventory environment 106. A profile 186 of a reader device 112 may include, in some cases, the KPI data 175, read success rates, interference levels, scanning efficiency metrics, latencies, signal strengths, ToA, AoA, modulation characteristics, etc., and other attributes of signals received at the reader device 112. For example, a profile 186 of a reader device 112 may indicate latencies experienced while receiving tag data 136 from tags 115 (e.g., determined by the controller application 150 based on the ToA carried in the signal metadata 194), the strength and quality of the signals received at the reader devices 112, etc. The profile 186 of a detected tag 115 may indicate, for example, frequencies supported by the tag 115, capabilities of the tag 115, collision behavior of the tag 115, mobility status (static versus mobile), location data of the tag 115, security features of the tag 115, other tags 115 positioned on the same item as the tag 115, etc.

The signal metadata 194 may refer to information derived from the properties of signals received from the tags 115, such as, for example, received signal strength indicator (RSSI), signal-to-noise ratio (SNR), frequency, ToA, AoA, etc. The signal metadata 194 may provide insights that may be used for interference detection, location tracking, and performance optimization of tags 115.

The inventory data 196 may refer to an aggregation of the tag data 136 received from reader devices 112 in particular areas 110 of the inventory environment 106 or read zones of the reader devices 112. For example, the inventory data 196 may refer to the tag data 136 and signal metadata 194 describing the signals over which the tag data 136 was received by a reader device 112. In this way, the inventory data 196 may be specific to a reader device 112, and may be collected over different frequencies/capabilities 124 supported by the reader device 112, such that the inventory parameter 178 for each of the different frequencies/capabilities 124 can be computed.

The scanning sequence 171 may refer to a schedule or plan dictating when and how (e.g., frequency band/channel, power level, etc.) each of the reader devices 112 operate within an inventory environment 106 to optimize scanning efficiencies, minimize interference, and ensure comprehensive tag detection. The scanning sequence 171 may be determined to optimize the sequence of scanning across the set of reader devices 112 to accomplish the goal or objective.

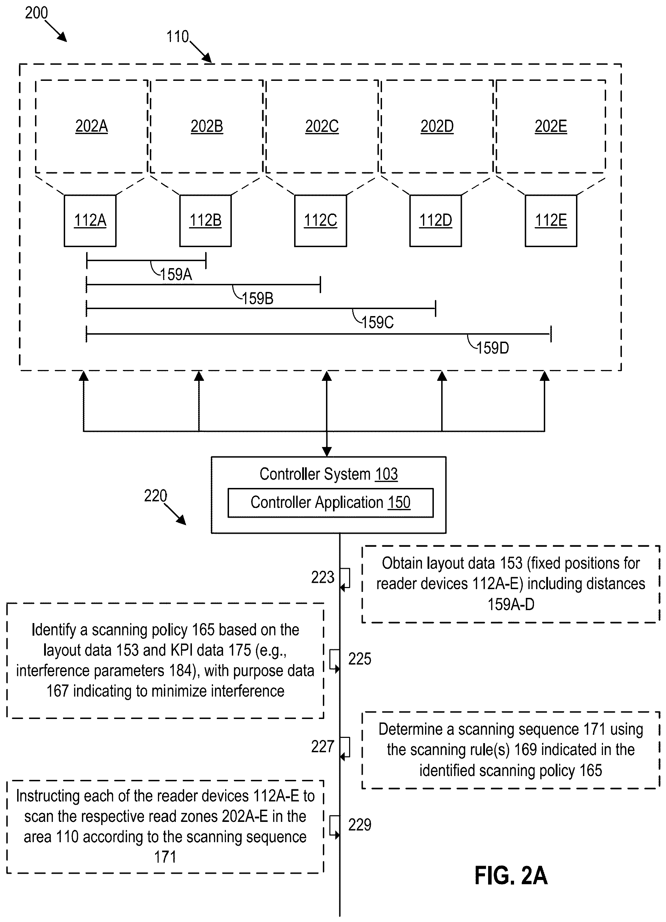

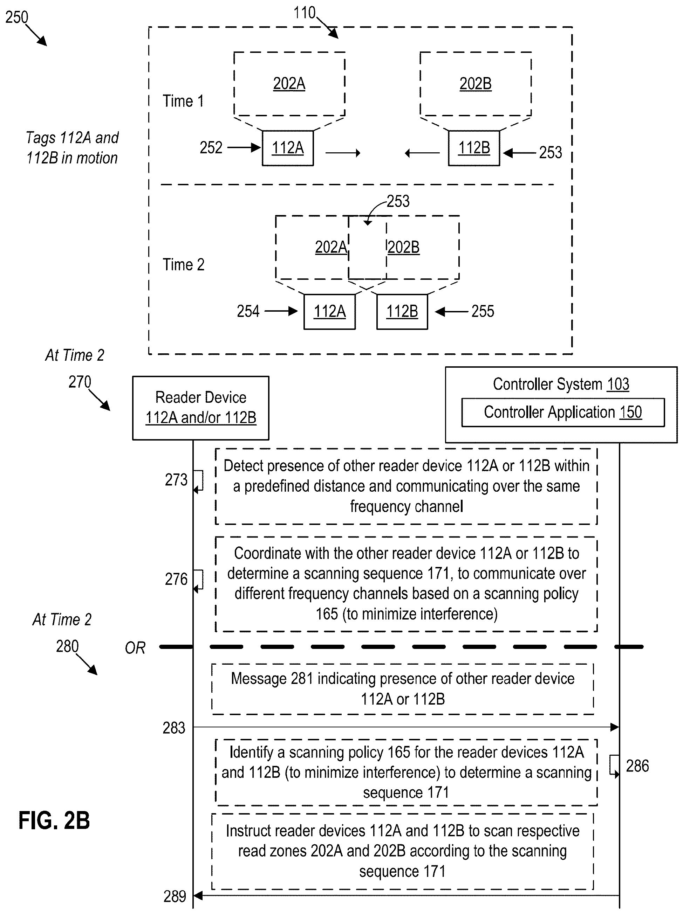

Referring now to FIGS. 2A and 2B, shown are diagrams illustrating a scanning sequence configuration of reader devices 112 in the inventory system located in the communication network 100 of FIG. 1. Specifically, the reader devices 112 depicted in FIG. 2A are in fixed, static positions, while the reader devices 112 depicted in FIG. 2B are mobile.

Turning now to FIG. 2A, shown is a diagram 200 illustrating a scanning sequence configuration across reader devices 112A, 112B, 112C, 112D, and 112E. As mentioned above, reader devices 112A, 112B, 112C, 112D, and 112E have fixed positions in the area 110 of the inventory environment 106. Within area 110, each of the reader devices 112A, 112B, 112C, 112D, and 112E have respective read zones 202A, 202B, 202C, 202D, and 202E. Specifically, reader device 112A has a read zone 202A, reader device 112B has a read zone 202B, reader device 112C has a read zone 202C, reader device 112D has a read zone 202D, and reader device 112E has a read zone 202E. A read zone 202A-E may refer to a defined spatial region within which a reader device 202A-E may successfully detect, interrogate, and communicate with tags 115. While the read zones 202A-E shown in FIG. 1 are rectangular in shape and nonoverlapping, it should be appreciated that the read zones 202A-E may embody any shape and may overlap with one another. The size and shape of a read zone 202A-E may be influenced by factors such as a power setting 132 of the reader device 112, antenna type and orientation, operating frequency 130, environmental conditionals, and tag characteristics.

Each of the reader devices 112A-E may be separated by distances shown in FIG. 2A, as recorded in the distance data 159. For example, the distance between reader device 112A and 112B may be recorded as distance data 159A, the distance between reader device 112A and 112C may be recorded as distance data 159B, the distance between reader device 112A and 112D may be recorded as distance data 159C, and the distance between reader device 112A and 112E may be recorded as distance data 159D. While the distances between the reader device 112A and each of reader devices 112B, 112C, 112D, and 112E appear to be the same or substantially similar, it should be appreciated that reader devices 112A-E may be separated by any amount of distance. While only the distances from reader device 112A are shown, it should be appreciated that distances between each of the reader devices 112A-E may be recorded in the distance data 159.

FIG. 2A also depicts method 220 for determining and implementing a scanning sequence 171 across reader devices 112A-E based on the layout data 153 describing the locations, angles, and/or orientation of the reader devices 112A-E in the area 110. Method 220 may be performed by the controller application 150 executed in the controller system 103. Method 220 includes various operations that may be performed in the sequence shown in FIG. 2A or in another sequence. Some of the operations in method 220 may be omitted in the process of determining and implementing a scanning sequence 171 across reader devices 112A-E.

Method 220 may begin with operation 223. At operation 223, the controller application 150 executing at the controller system 103 may obtain layout data 153 for readers 115A-E in the area 110 of the inventory environment 103. The controller application 150 may obtain the layout data 153 in various manners. For example, each of the reader devices 112A-E may perform an initial scan of the area 110 to obtain an inventory of the tags 115 in the area 110 (e.g., receive an indication/identification of the tags 115 that are in the area 110). The initial scan may be over a predefined frequency (e.g., the reader device 112 may transmit interrogation signals into the area 110 over a low frequency or a high frequency), which may trigger the tags 115 capable of receiving the low/high frequency interrogation signals to respond with tag data 136. In some case, the reader device 112A-E may store reader location data 134 describing the location, angle, orientation, and/or other attribute of the reader devices 112A-E. The reader devices 112A-E may transmit, to the controller system 103, the reader location data 134 (if available) with the received tag data 136 and signal metadata 194 describing the signals over which the tag data 134 was received. A controller application 150 executing at the controller system 103 may receive and store this layout data 153, tag data 136, and signal metadata 194.

As another example, technicians may physically measure or record locations and orientations of each reader device 112A-E and antenna 120 (sometimes referencing floor plans or building blueprints) and store this data as the reader location data 134 at the reader device 112A-E. As another example, mobile robots and/or drones with communication capabilities may traverse the area 110 detecting the reader device 112A-E locations/angles/orientations, and updating the controller system 103 with this layout data 153. As yet another example, reader devices 112A-E may include onboard sensors that may detect movement or orientation changes, automatically trigger an update to the layout data 153, which may then be sent to the controller system 103.

In this case, the layout data 153 may include one or more of location data 157 describing three dimensional coordinates of each of the reader devices 112A-E, angle and orientation data 161 describing the angles and orientation of each of the reader devices 112A-E, the distance data 159A-D recorded, as described above, and capability data 163 describing the capabilities 124 of each of the reader devices 112A-E. Since the locations of these reader devices 112A-E remain fixed, the controller application 150 may not receive updates to this layout data 153.

At operation 225, the controller application 150 may identify a scanning policy 165 to apply to the reader devices 112A-E based on the layout data 153 and purpose data 167 indicating a purpose to minimize interference at the signals received at each of the reader devices 112A-E (and in some cases, the KPI data 175). The purpose data 167 may be received by the controller system 103 from an operator requesting the scan to be performed by the reader devices 112A-E (e.g., via a user interface of the controller system 103 or another device in communication with the controller system 103). The scanning policy 165 may be identified based on the layout data 153 and/or the purpose data 167 meeting one or more predefined conditions. For example, a scanning policy 165 may indicate a condition defining that multiple reader devices 112A-E should be adjacent to and/or within a predefined distance from one another, and a condition defining the purpose to be for minimizing interference across the reader devices 112A-E. In some cases, a condition for the scanning policy 165 may also be based on the KPI data 175 (e.g., a condition defining a minimum value for an interference parameter 184 across at least one supported frequency channel at the reader device 112A-E).

The controller application 150 may then perform operation 227 to determine a scanning sequence 171 using one or more scanning rules 169 indicated in the identified scanning policy 165. As described herein, each scanning policy 165 is associated with the purpose data 167 and one or more scanning rules 169 that defines logic or code for defining a scanning sequence 171 for the reader devices 112A-E based on one or more conditions. For example, the scanning policy 165 may include a scanning rule 169 specifying that two adjacent reader devices 112A and 112B or two reader devices 112A and 112B within a first predefined distance from one another are not permitted to communicate over the same frequency channel at the same time. The scanning rule 169 may also indicate that two reader devices 112A and 112E greater than a second predefined distance from one another are permitted to communicate over the same frequency channel at the same time. These scanning rules 169 may serve the purpose indicated in the purpose data 167 (to minimize interference across signals communicated by reader devices 112A-E).

The controller application 150 may identify all of the scanning rules 169 including conditions that apply to the set of reader devices 112A-E based on the layout data 153 (e.g., the locations, angles, orientations, and capabilities of the reader devices 112A-E). The controller application 150 may identify all of the scanning rules 169 including conditions that apply to the KPI data 175 of each of the reader devices 112A-E (e.g., to determine the supported frequencies, power levels, and/or other settings or capabilities at each of the reader devices 112A-E that may be optimal for minimizing interference at the reader devices 112A-E). The controller application 150 may then be programmed to determine (e.g., generate) the scanning sequence 171 according to all of the identified scanning rules 169 that apply to the reader devices 112A-E in the area 110.

For example, the scanning sequence 171 may indicate that the reader device 112A transmits first interrogation signals over a first frequency channel within a frequency band at a first time, reader device 112B transmits second interrogation signals over a second frequency channel within the frequency band at the first time, reader device 112C transmits third interrogation signals over a third frequency channel within the frequency band at the first time, reader device 112D transmits fourth interrogation signals over a fourth frequency channel within the frequency band at the first time, and reader device 112E transmits fifth interrogation signals over the first frequency channel within the frequency band at the first time. This scanning sequence 171 may optimize the scanning of tags 115 while minimizing interference across the five reader devices 112, and reader device 112A and reader device 112E may be far enough away from each other (greater than a predefined distance) such that the use of the same first frequency channel at the same time may not cause interference. The scanning sequence 171 may be even further refined to ensure that each of the reader devices 112A-E all perform scans at different times, to further reduce interference levels between the scans.

At operation 229, the controller application 150 may transmit an instruction to each of the reader devices 112A-E to scan the respective read zones 202A-E in the area 110 according to the scanning sequence 171. For example, the scanning sequence 171 may include identifiers of reader devices 112A-E and the times, frequency channels/bands, power levels, and other settings over which the reader device 112A-E is to scan the area 110. The reader device 112A-E may each be programmed to evaluate the scanning sequence 171, determine when the reader device 112A-E is to perform the scan and the parameters/settings to adjust to perform the scan, and perform the scan accordingly (otherwise the reader device 112A-E may ignore the details in the scanning sequence 171 related to other reader devices 112A-E).

Turning now to FIG. 2B, shown is a diagram 250 illustrating a scanning sequence configuration across reader devices 112A and 112B. As mentioned above, reader devices 112A and 112B are mobile within the area 110 of the inventory environment 106. At time 1, reader device 112A (having read zone 202A) is in a first position 252 and reader device 112B (having a read zone 202B) is in a second position 253, and the read zone 202A and read zone 202B do not overlap at time 1. At time 2 (after time 1), reader device 112A moves to position 254 and reader device 112B moves to position 255, such that the read zone 202A of the reader device 112A and the read zone 202B of the reader device 112B overlap in overlapping region 253. Said another way, at time 1, the reader devices 112A and 112B may be positioned far away from one another (e.g., greater than at least a first predefined distance) such that the signals received at the reader devices 112A and 112B do not pick up interference from one another. But at time 2, the reader devices 112A and 112B may be positioned proximate enough to one another (e.g., less than a second predefined distance from one another) such that the signals received at the reader devices 112A and 112B may pick up interference from one another. The controller application 150 may determine the interference levels by computing the interference parameters 184 at the reader devices 112A and 112B at the different positions 252, 253, 254, and 255.

FIG. 2B also depicts methods 270 and 280. Method 270 may be a method performed by the reader devices 112A and 112B autonomously (without necessarily including the help of the controller system 103) for determining a scanning sequence 171 between the reader devices 112A and 112B at time 2. In contrast, method 280 may be a method performed by the reader devices 112A and 112B and the controller system 103 for determining a scanning sequence 171 between the reader devices 112A and 112B at time 2. Methods 270 and 280 may be performed by the controller application 150 executed in the controller system 103, and the application 118 at the reader devices 112A and 112B. Methods 270 and 280 includes various operations that may be performed in the sequence shown in FIG. 2B or in another sequence. Some of the operations in methods 270 and 280 may be omitted in the process of determining and implementing a scanning sequence 171 across reader devices 112A-B.

Method 270 may begin with operation 273, in which either the reader device 112A or the reader device 112B detects a presence of the other reader device 112A or the reader device 112B at time 2, when the two reader devices 112A-B are within the second predefined distance from one another and the two reader devices 112A-B are communicating over the same frequency channel. For example, either the reader device 112A or the reader device 112B may receive noise or interference from signals communicated by the other reader device 112A or the reader device 112B to determine that two reader devices 112A-B are within the second predefined distance from one another and the two reader devices 112A-B are communicating over the same frequency channel.

At operation 276, the reader device 112A and the reader device 112B may coordinate with one another to determine a scanning sequence 171 based on a scanning policy 165 with a purpose to minimize interference between the reader devices 112A and 112B. For example, the scanning sequence 171 may specify that the reader devices 112A and 112B communicate over different frequency channels at the same time and/or communicate at different times. For example, the scanning policies 165 may be provisioned at the reader devices 112A and 112B locally, such that the application 118 and the reader devices 112A and 112B may each evaluate the scanning policies 165 based on a purpose (e.g., provided by a user) to identify scanning rules 169 associated with the purpose and the layout of the reader devices 112A and 112B, to programmatically determine a scanning sequence 171 between the reader devices 112A and 112B. The reader devices 112A and 112B may then communicate with each other to program the scanning sequence 171 at the reader devices 112A and 112B. The reader devices 112A and 112B may then communicate with tags 115 in the read zones 202A and 202B (and the overlapping region 253) as indicated in the scanning sequence 171 (to communicate over different frequency channels at the same time and/or communicate at different times).

This method 270 may be particularly advantageous when the reader devices 112A and/or 112B are moving with a high speed. For example, method 270 may be far more efficient in reprogramming reader devices 112A-B based on the movement of the reader devices 112A-B, to ensure maximum coverage and prevent signal loss. The efficiencies gained by performing the scanning sequence 171 determination locally (as opposed to sending the data over the network 109 to the controller system 103) may thus provide more accurate inventory data 196.

Method 280 (involving the controller system 103) may be performed after operation 273 in which either the reader device 112A or the reader device 112B detected a presence of the other reader device 112A or the reader device 112B at time. At operation 283, the reader device 112A or 112B may transmit a message 281 indicating the presence of the other reader device 112A or 112B to the controller system 103. The message 281 may indicate identifiers of the reader devices 112A and 112B, the time 2, and the frequency channel over which both of the reader devices 112A and 112B are communicating.

At operation 286, the controller application 150 at the controller system 103 may identify a scanning policy 165 based on a user-defined purpose (as indicated in purpose data 167) and layout data 153 defining the positions 254 and 255 of the reader devices 112A and 112B at time 2. The purpose may be to minimize interference, and a scanning policy 165 may include one or more scanning rules 169 applicable to moving reader devices 112A and 112B that are within the second predefined distance from one another. The controller application 150 may determine the scanning sequence 171 between the reader devices 112A and 112B based on the identified scanning policy 165.

At operation 289, the controller application 150 may transmit instructions to reader devices 112A and 112B to scan the respective read zones 202A and 202B according to the determined scanning sequence 171. The scanning sequence 171 may instruct the reader devices 112A and 112B to communicate over different frequency channels at the same time and/or communicate at different times.

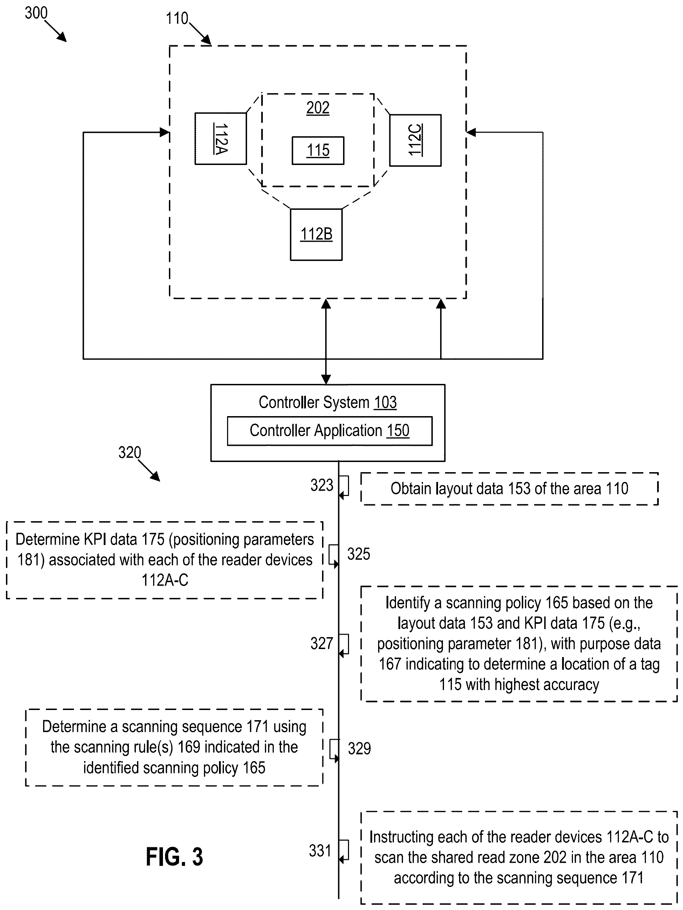

Referring now to FIG. 3, shown is a diagram 300 illustrating a scanning sequence configuration of reader devices 112A, 112B, and 112C in the inventory system located in the communication network 100 of FIG. 1. As shown in FIG. 3, the reader devices 112A, 112B, and 112C are positioned in the area 110 proximate enough to one another to share a read zone 202. The reader devices 112A, 112B, and 112C are also positioned around a tag 115. The user-defined purpose to perform the scan with the reader devices 112A, 112B, and 112C may be to perform tag positioning of tag 115 with maximum accuracy (e.g., as indicated in purpose data 167 received from a user or operator engaging with the controller system 103 and/or one or more of the reader devices 112A, 112B, and 112C). The layout data 153 of area 110 may indicate the locations, angles, and/or orientations of the reader devices 112A, 112B, and 112C. The layout data 153 may also indicate that the reader devices 112A, 112B, and 112C share a region of the inventory environment 106 as the read zone 202. It should be appreciated that all three reader devices 112A, 112B, and 112C may have different read zones 202, but the read zones 202 may overlap in an area in which the tag 115 is located.

FIG. 3 also depicts method 320 for determining and implementing a scanning sequence 171 across reader devices 112A-C based on the layout data 153 describing the locations, angles, and/or orientation of the reader devices 112A-C and KPI data 175 (e.g., positioning parameters 181 of the reader devices 112A-C). Method 320 may be performed by the controller application 150 executed in the controller system 103. Method 320 includes various operations that may be performed in the sequence shown in FIG. 3 or in another sequence. Some of the operations in method 320 may be omitted in the process of determining and implementing a scanning sequence 171 across reader devices 112A-C.

Method 320 may begin with operation 323. At operation 323, the controller application 150 executing at the controller system 103 may obtain layout data 153 for readers 115A-C in the area 110 of the inventory environment 106. As mentioned above, the layout data 153 may indicate the locations, angles, and/or orientations of the reader devices 112A, 112B, and 112C, that the tag 116 is located in a read zone 202 of each of the reader devices 112A, 112B, and 112C, and/or that the reader devices 112A, 112B, and 112C share an area of the inventory environment 106 as the read zone 202.

At operation 325, the controller application 150 may determine KPI data 175 associated with each of the reader devices 112A-C. For example, the KPI data 175 may refer to the positioning parameter 181 of each of the reader devices 112A-C. For example, the controller application 150 may determine the antenna settings 126 of a reader device 112A-C that result in the reader device 112A-C capturing signals that result in the most accurate tag location computations (e.g., based on signal metadata 194 collected over different frequencies and power levels at each of the reader devices 112A-C). The controller application 150 may determine the positioning parameter 181 for the different frequencies, powers, and capabilities of the reader devices 112A-C to determine the optimal antenna settings 126 of each of the reader devices 112A-C for the purpose of communicating signals that result in the most accurate tag positioning computations.

At operation 327, the controller application 150 may identify a scanning policy 165 to apply to the reader devices 112A-C based on the layout data 153 and the KPI data 175 (e.g., the determined position parameters 181), and further based on the purpose data 167 indicating the purpose of determining the location of the tag 115 with the highest accuracy. The purpose data 167 may be received by the controller system 103 from an operator requesting the scan to be performed by the reader devices 112A-C (e.g., via a user interface of the controller system 103 or another device in communication with the controller system 103). The scanning policy 165 may be identified based on the layout data 153, KPI data 175, and/or the purpose data 167 meeting one or more predefined conditions. For example, a scanning policy 165 may indicate a condition that when the purpose data 167 is for tag positioning accuracy and the reader devices 112A-C share a read zone 202 (or at least a portion of the read zone 202), certain scanning rules 169 apply.

The applicable scanning rules 169 may instruct generation of a scanning sequence 171, instructing each of the reader devices 112A-C to transmit the interrogation signals into the shared read zone 202 over the same frequency channel at the same time, and in some cases, using similar power levels. This may trigger the tag 115 to respond with similar signals back to each of the reader devices 112A-C, such that the signal metadata 194 of the signals may be used to determine the location of the tag 115. For example, the location of the tag 115 may be determined using trilateration or triangulation based on the signal metadata 194 (e.g., RSSI, signal strength, AoA, ToA, etc.) of signals received at the three reader devices 112A, 112B, and 112C. In some cases, the scanning rules 169 may also include code or logic to determine the frequency channel that all three of the reader devices 112A-C should use communicate with the tag 115 based on the positioning parameters 181 of the reader devices 112A-C. For example, the scanning rule 169 may instruct that the frequency channel for communication should be a supported frequency channel at all three reader devices 112A-C that has at least above a threshold positioning parameter 181 across all three reader devices 112A-C.

At operation 329, the controller application 150 may use the scanning rules 169 indicated in the identified scanning policy 165 to determine the scanning sequence 171 for the reader devices 112A-C. At operation 331, the controller application 150 may instruct each of the reader devices 112A-C to scan the shared read zone 202 in the area 110 according to the scanning sequence 171. Each of the reader devices 112A-C may transmit interrogation signals into the shared read zone 202 at the same time over the same frequency channel, which may be used to power the tag 115. The tag 115 may transmit response signals with tag data 136 back to each of the reader devices 112A-C. The reader devices 112A-C may collect the tag data 136 and signal metadata 194 describing the response signals, and transmit the tag data 136 and signal metadata 194 to the controller system 103. The controller application 150 at the controller system 103 may use signal metadata-based location methods (e.g., RSSI-based, ToA-based, AoA-based, etc.) to determine a location of the tag 115 (e.g., using triangulation or trilateration).

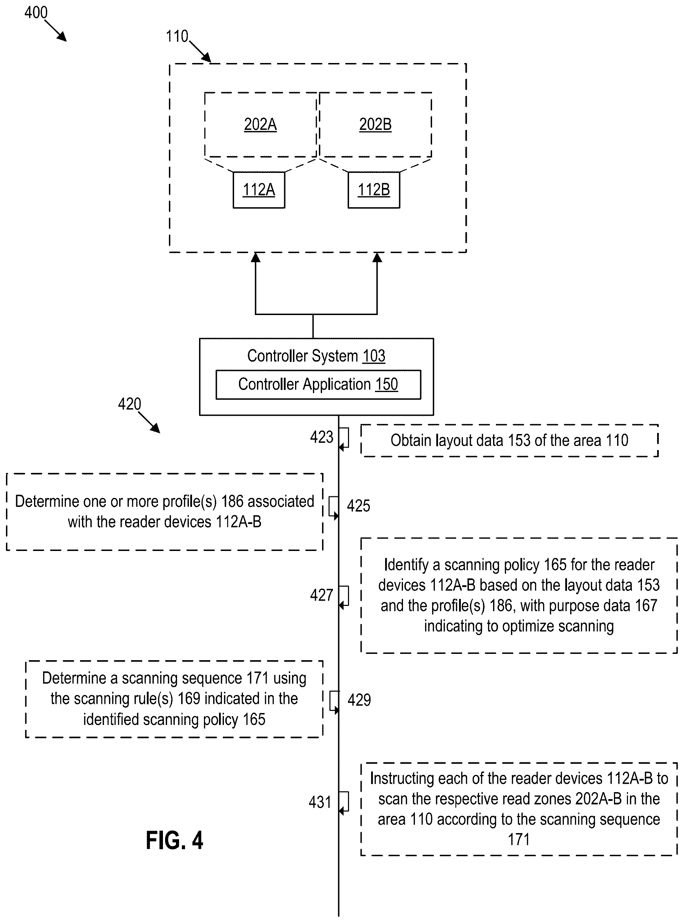

Referring now to FIG. 4, shown is a diagram 400 illustrating a scanning sequence configuration of reader devices 112A and 112B in the inventory system located in the communication network 100 of FIG. 1. As shown in FIG. 4, the reader devices 112A and 112B are positioned in an area 110 proximate to one another (e.g., within a predefined distance of one another), but the read zones 202A and 202B of the reader devices 112A and 112B, respectively, do not overlap in the area 110. The layout data 153 may indicate the locations, angles, and/or orientations of the reader devices 112A and 112B. The purpose of the scan illustrated in the example shown in diagram 400 may be to optimize scanning using the capabilities 124 of the reader devices 112A-B (without regard necessarily to potential interference issues, tag positioning accuracy, the mobility of the tags 115, etc.).

FIG. 4 also depicts method 420 for determining and implementing a scanning sequence 171 across reader devices 112A-B based on the layout data 153 describing the locations, angles, and/or orientation of the reader devices 112A-C and one or more profiles 186 associated with the reader devices 112A-B. Method 420 may be performed by the controller application 150 executed in the controller system 103. Method 420 includes various operations that may be performed in the sequence shown in FIG. 4 or in another sequence. Some of the operations in method 420 may be omitted in the process of determining and implementing a scanning sequence 171 across reader devices 112A-B.

Method 420 may begin with operation 423. At operation 423, the controller application 150 executing at the controller system 103 may obtain layout data 153 for readers 115A-B in the area 110 of the inventory environment 103. As mentioned above, the layout data 153 may indicate the locations, angles, and/or orientations of the reader devices 112A and 112B, and/or the read zones 202A and 202B, respectively, of the reader devices 112A and 112B.

At operation 425, the controller application 150 may determine one or more profiles 186 associated with the reader devices 112A-B. The one or more profiles 186 may be directly related to the reader devices 112A-B, describing functions/capabilities of tags 115 detected in the read zones 202A-B, and/or describing environmental factors (e.g., obstacles, materials - metal, water, etc., dense positioning of tags 115, etc., detected in a read zone 202A-B). For example, the controller application 150 may determine a profile 186 for the reader device 112A indicating that the reader device 112A experiences above a threshold latency when communicating with tags 115 in the read zone 202A. The controller application 150 may determine a profile 186 for the reader device 112B indicating that one or more tags 115 in read zone 202B of the reader device 112B are capable of processing data (e.g., a smart tag 115). These tags 115 may, for example, be capable of evaluating data carried in interrogation signals (e.g., a code carried in interrogation signals) and only respond to the interrogation signals based on the data carried in the interrogation signals. For example, the tags 115 may only respond to interrogation signals carrying code that is stored at the data store 137 of the tag 115. The reader device 112B communicating with such tags 115 that are processing the interrogation signals may experience a longer delay when receiving response from these tags 115. Therefore, in this example, the reader device 112A experiences a latency, while the reader device 112B may need more time to communicate with smarter tags 115.

At operation 427, the controller application 150 may identify a scanning policy 165 to apply to the reader devices 112A-B based on the layout data 153 and the one or more profiles 186, and further based on the purpose data 167 indicating the purpose of optimizing scanning across the reader devices 112A-B. The purpose data 167 may be received by the controller system 103 from an operator requesting the scan to be performed by the reader devices 112A-B (e.g., via a user interface of the controller system 103 or another device in communication with the controller system 103). The scanning policy 165 may be identified based on the layout data 153, one or more profiles 186, and/or the purpose data 167 meeting one or more predefined conditions.

For example, a scanning policy 165 may indicate a condition that when the purpose data 167 is for scan optimization, certain scanning rules 169 apply. The applicable scanning rules 169 may instruct generation of a scanning sequence 171 instructing each of the reader devices 112A-B to transmit the interrogation signals and wait certain predefined amounts of time to account of the conditions detected and indicated in the profiles 186 associated with the reader devices 112A and 112B. As mentioned above, the reader device 112A experiences a latency, while the reader device 112B may need more time to communicate with smarter tags 115. A scanning rule 169 may indicate that the latency experienced by the reader device 112A may be estimated to be a first predefined amount of time, and the time the reader device 112B may need to communicate with the smarter tags 115B may be estimated to be a second predefined amount of time. The scanning policy 165 and the applicable scanning rules 169 may instruct the scanning sequence 171 to be generated based on the reader device 112A scanning the read zone 202A and waiting the first predefined amount of time, and the reader device 112B scanning the read zone 202B and waiting the second predefined amount of time.

At operation 429, the controller application 171 may use the scanning rules 169 indicated in the identified scanning policy 165 to determine the scanning sequence 171 for the reader devices 112A-B. At operation 331, the controller application 150 may instruct each of the reader devices 112A-B to scan the read zones 202A-B in the area 110 according to the scanning sequence 171. Each of the reader devices 112A-B may transmit interrogation signals into the read zones 202A-B according the times indicated in the scanning sequence 171. The reader device 112A may wait the first predefined amount of time, as indicated in the scanning sequence 171, to receive response signals from tags 115 in the read zone 202A (e.g., wait the amount of time to account for the latency experienced by the reader device 112A). Similarly, the reader device 112B may wait the second predefined amount of time, as indicated in the scanning sequence 171, to receive response signals from the smart tags 115 in the read zone 202B (e.g., wait the amount of time that may be needed for the smart tags 115 to process the interrogation signals and respond).

In this way, the scanning sequence 171 may optimize the scans performed by the reader devices 112A-B. This may be because, by waiting the first predefined amount of time and the second predefined amount of time, respectively, the reader devices 112A-B may be far more likely to accurately detect all of the tags 115 in the read zones 202A-B based on the capabilities and supported features of the tags 115. In this way, the scanning schedule may provide more accurate inventory data 196 and less reading gaps performed by the reader devices 112A and 112B.

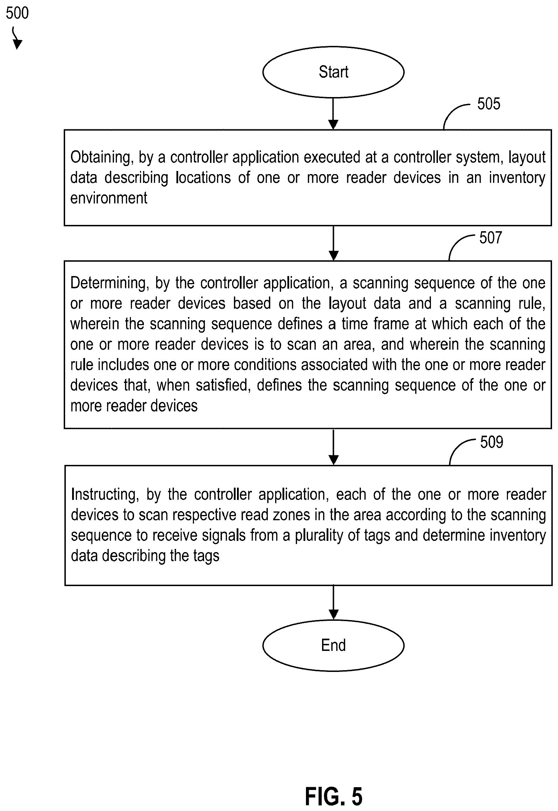

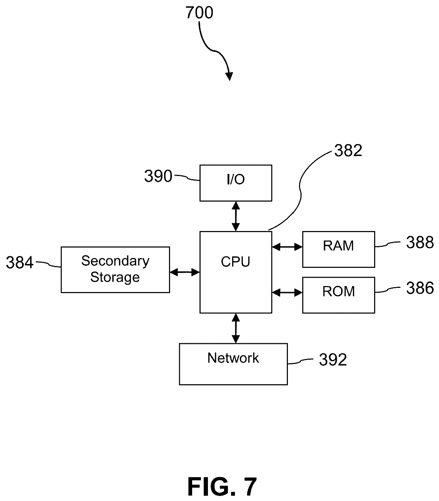

Turning now to FIG. 5, shown is a method 500 for optimal scanning sequence configuration at reader devices using the inventory system of FIG. 1 according to various embodiments of the disclosure. In embodiments, the method 500 may be implemented using a computer system with components as shown in FIG. 7. As illustrated, method 500 of FIG. 5 includes a number of enumerated operations, but embodiments of the operations in FIG. 5 may include additional operations before, after, and in between the enumerated operations. In some embodiments, one or more of the enumerated operations may be omitted or performed in a different order. Method 500 may be performed by an application executing at a computer system, and the application may refer to the controller application 150 at the controller system 103, and/or the application 118 at the reader devices 112.

At step 505, method 500 comprises obtaining, by a controller application 150 executed at a controller system 103, layout data 153 describing locations of one or more reader devices 112 in an inventory environment 106. At step 507, method 500 comprises determining, by the controller application 150, a scanning sequence 171 of the one or more reader devices 112 based on the layout data 151 and a scanning rule 169. In an embodiment, the scanning sequence 171 defines a time frame at which each of the one or more reader devices 112 is to scan an area 110. In an embodiment, the scanning rule 169 includes one or more conditions associated with the one or more reader devices 112 that, when satisfied, defines the scanning sequence 171 of the one or more reader devices. At step 509, method 500 comprises instructing, by the controller application 150, each of the one or more reader devices 112 to scan respective read zones 202 in the area 110 according to the scanning sequence 171 to receive signals from a plurality of tags 115 and determine inventory data 196 describing the tags 115.

Method 500 may further comprise additional attributes and/or steps not explicitly shown in FIG. 5. In an embodiment, the layout data 153 further comprises distance data 159 describing a distance between each of the one or more reader devices 112, an angle of each of the one or more reader devices 112, an orientation of each of the one or more reader devices 112, and one or more capabilities 124 of each of the one or more reader devices 112. In an embodiment, the scanning sequence 171 also defines a frequency channel over which one or more reader devices 112 is to communicate when scanning the area 110. In an embodiment, the scanning rule 169 is associated with a scanning policy 165 that defines the scanning rule 169 based on the layout data 153 and a purpose of a scan.

In an embodiment, the scanning rule 169 is associated with a scanning policy 165 having a purpose of minimizing interference, and the scanning rule 169 includes logic to ensure that reader devices 112 within a predefined distance from one another do not perform scans over a common frequency channel. In an embodiment, the scanning rule 169 is associated with a scanning policy 165 having a purpose of maximizing tag location accuracy, and the scanning rule 169 includes logic to instruct three adjacent reader devices 112 to scan a common read zone 202 over a common frequency channel to receive signals from a tag 115 and use signal metadata 194 describing the signals to perform triangulation or trilateration to determine a location of the tag 115.

In an embodiment, the layout data 153 is obtained periodically according to a trigger event or based on a schedule, and the trigger event is a message 281 received from a first reader device 112 having detected that a second reader device 112 is within a predefined distance of the first reader device 112 and communicating over a common frequency channel. In an embodiment, method 500 may further comprise obtaining, by the controller application 150, KPI data 175 describing each of the one or more reader devices 112 based on the signals received from each of the tags 115 and the inventory data 196 detected in each of the respective read zones, in which the scanning rule 169 is further based on the KPI data 175. In an embodiment, method 500 may further comprise obtaining, by the controller application 158, one or more profiles 186 for one or more of the tags 115, the one or more reader devices 112, or each respective read zone 202 based on the KPI data 176, signal metadata 194 describing the signals received from the tags 115, and the inventory data 196 detected in each respective read zone 202.

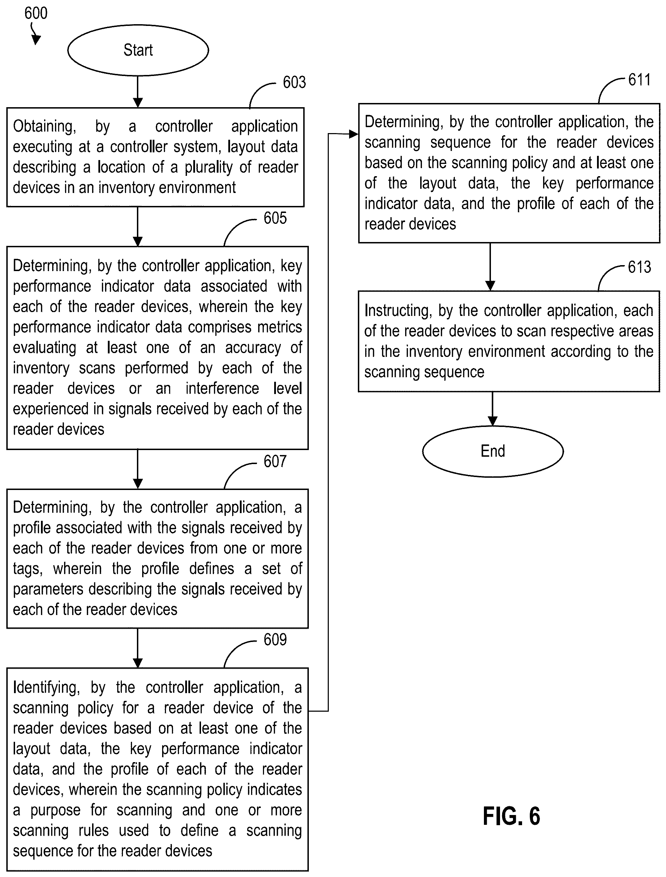

Turning now to FIG. 6, shown is a method 600 for optimal scanning sequence configuration at reader devices using the inventory system of FIG. 1 according to various embodiments of the disclosure. In embodiments, the method 600 may be implemented using a computer system with components as shown in FIG. 7. As illustrated, method 600 of FIG. 6 includes a number of enumerated operations, but embodiments of the operations in FIG. 6 may include additional operations before, after, and in between the enumerated operations. In some embodiments, one or more of the enumerated operations may be omitted or performed in a different order. Method 600 may be performed by an application executing at a computer system, and the application may refer to the controller application 150 at the controller system 103, and/or the application 118 at the reader devices 112.

At step 603, method 600 comprises obtaining, by a controller application 150 executing at a controller system 103, layout data 153 describing a location of a plurality of reader devices 112 in an inventory environment 106. At step 605, method 600 comprises determining, by the controller application 150, KPI data 175 associated with each of the reader devices 112. In an embodiment, the KPI data 175 comprises metrics evaluating at least one of an accuracy of inventory scans performed by each of the reader devices 112 or an interference level experienced in signals received by each of the reader devices 112. At step 607, method 600 comprises determining, by the controller application 150, a profile 186 associated with the signals received by each of the reader devices 112 from one or more tags 115. In an embodiment, the profile 186 defines a set of parameters describing the signals received by each of the reader devices 112.

At step 609, method 600 comprises identifying, by the controller application 150, a scanning policy 165 for a reader device 112 of the one or more reader devices 112 based on at least one of the layout data 153, the KPI data 175, and the profile 186 of each of the reader devices 112. The scanning policy 165 indicates a purpose for scanning and one or more scanning rules 169 used to define a scanning sequence 171 for the reader devices 112. At step 611, method 600 comprises determining, by the controller application 150, the scanning sequence 171 for the reader devices 112 based on the scanning policy 165 and at least one of the layout data 153, the KPI data 175, and the profile 186 of each of the reader devices 112. At step 613, method 600 comprises instructing, by the controller application 150, each of the reader devices 112 to scan respective areas 110 in the inventory environment 106 according to the scanning sequence 171.

Method 600 may further comprise additional attributes and/or steps not explicitly shown in FIG. 6. In an embodiment, prior to determining, by the controller application 150, the KPI data 175 associated with each of the reader devices 112, the method 600 may further comprise receiving, by the controller application 150 from each of the reader devices 112, inventory data 196 describing the tags 115 in a respective area 110 scanned by each of the reader devices 112 over a plurality of different frequencies supported by each of the reader devices 112, comparing, by the controller application 150, the inventory data 196 at each of the different frequencies supported by each of the reader devices 112 to identify an optimal frequency for each of the reader devices 112, and defining, by the controller application 150, the inventory parameter 178 for each of the reader devices 112 as the optimal frequency for each of the reader devices 112.

In an embodiment, prior to determining, by the controller application 150, the KPI data 175 associated with each of the reader devices 112, the method 600 may further comprise receiving, by the controller application 150 from each of the reader devices 112, interference data describing an interference level detected over a plurality of different frequencies supported by each of the reader devices 112, comparing, by the controller application 150, the interference data at each of the different frequencies supported by each of the reader devices 112 to identify an optimal frequency for each of the reader devices 112, and defining, by the controller application 150, the interference parameter 184 for each of the reader devices 112 as the optimal frequency for each of the reader devices 112.

In an embodiment, prior to determining, by the controller application 150, the KPI data 175 associated with each of the reader devices 112, the method 600 may further comprise receiving, by the controller application 150 from each of the reader devices 112, positioning accuracy data describing an accuracy of locating each of the tags 115 detected over a plurality of different frequencies supported by each of the reader devices 112, comparing, by the controller application 150, the positioning accuracy data each of the different frequencies supported by each of the reader devices 112 to identify an optimal frequency for each of the reader devices 112, and defining, by the controller application 150, the positioning parameter 181 for each of the reader devices 112 as the optimal frequency for each of the reader devices 112.

In an embodiment, the profile 186 describes at least one of a signal strength of a tag 115, a response latency based on communications with the tag 115, frequency capabilities of the tag 115, communication capabilities of the tag 115, obstructions in an area scanned by the reader device 112, environmental data describing an environment of a read zone 202 of the reader device 112, a responsiveness of the tag 115 to different power levels, angles, or distances of the reader device 112, unique identifiers associated with the tag 115, or a communication sensitivity levels of the tag 115. In an embodiment, the purpose for the scan (as indicated in the purpose data 167) is for at least one of minimize interference, optimize scanning, or maximize positioning accuracy.

FIG. 7 illustrates a computer system 700 suitable for implementing one or more embodiments disclosed herein. In an embodiment, the controller system 103, reader device 112, etc., may each be implemented as the computer system 700. The computer system 700 includes a processor 382 (which may be referred to as a central processor unit or CPU) that is in communication with memory devices including secondary storage 384, read only memory (ROM) 386, random access memory (RAM) 388, input/output (I/O) devices 390, and network connectivity devices 392. The processor 382 may be implemented as one or more CPU chips.

It is understood that by programming and/or loading executable instructions onto the computer system 700, at least one of the CPU 382, the RAM 388, and the ROM 386 are changed, transforming the computer system 700 in part into a particular machine or apparatus having the novel functionality taught by the present disclosure. It is fundamental to the electrical engineering and software engineering arts that functionality that can be implemented by loading executable software into a computer can be converted to a hardware implementation by well-known design rules. Decisions between implementing a concept in software versus hardware typically hinge on considerations of stability of the design and numbers of units to be produced rather than any issues involved in translating from the software domain to the hardware domain. Generally, a design that is still subject to frequent change may be preferred to be implemented in software, because re-spinning a hardware implementation is more expensive than re-spinning a software design. Generally, a design that is stable that will be produced in large volume may be preferred to be implemented in hardware, for example in an application specific integrated circuit (ASIC), because for large production runs the hardware implementation may be less expensive than the software implementation. Often a design may be developed and tested in a software form and later transformed, by well-known design rules, to an equivalent hardware implementation in an application specific integrated circuit that hardwires the instructions of the software. In the same manner as a machine controlled by a new ASIC is a particular machine or apparatus, likewise a computer that has been programmed and/or loaded with executable instructions may be viewed as a particular machine or apparatus.

Additionally, after the system 700 is turned on or booted, the CPU 382 may execute a computer program or application. For example, the CPU 382 may execute software or firmware stored in the ROM 386 or stored in the RAM 388. In some cases, on boot and/or when the application is initiated, the CPU 382 may copy the application or portions of the application from the secondary storage 384 to the RAM 388 or to memory space within the CPU 382 itself, and the CPU 382 may then execute instructions that the application is comprised of. In some cases, the CPU 382 may copy the application or portions of the application from memory accessed via the network connectivity devices 392 or via the I/O devices 390 to the RAM 388 or to memory space within the CPU 382, and the CPU 382 may then execute instructions that the application is comprised of. During execution, an application may load instructions into the CPU 382, for example load some of the instructions of the application into a cache of the CPU 382. In some contexts, an application that is executed may be said to configure the CPU 382 to do something, e.g., to configure the CPU 382 to perform the function or functions promoted by the subject application. When the CPU 382 is configured in this way by the application, the CPU 382 becomes a specific purpose computer or a specific purpose machine.

The secondary storage 384 is typically comprised of one or more disk drives or tape drives and is used for non-volatile storage of data and as an over-flow data storage device if RAM 388 is not large enough to hold all working data. Secondary storage 384 may be used to store programs which are loaded into RAM 388 when such programs are selected for execution. The ROM 386 is used to store instructions and perhaps data which are read during program execution. ROM 386 is a non-volatile memory device which typically has a small memory capacity relative to the larger memory capacity of secondary storage 384. The RAM 388 is used to store volatile data and perhaps to store instructions. Access to both ROM 386 and RAM 388 is typically faster than to secondary storage 384. The secondary storage 384, the RAM 388, and/or the ROM 386 may be referred to in some contexts as computer readable storage media and/or non-transitory computer readable media.

I/O devices 390 may include printers, video monitors, liquid crystal displays (LCDs), touch screen displays, keyboards, keypads, switches, dials, mice, track balls, voice recognizers, card readers, paper tape readers, or other well-known input devices.

The network connectivity devices 392 may take the form of modems, modem banks, Ethernet cards, universal serial bus (USB) interface cards, serial interfaces, token ring cards, fiber distributed data interface (FDDI) cards, wireless local area network (WLAN) cards, radio transceiver cards, and/or other well-known network devices. The network connectivity devices 392 may provide wired communication links and/or wireless communication links (e.g., a first network connectivity device 392 may provide a wired communication link and a second network connectivity device 392 may provide a wireless communication link). Wired communication links may be provided in accordance with Ethernet (IEEE 802.3), Internet protocol (IP), time division multiplex (TDM), data over cable service interface specification (DOCSIS), wavelength division multiplexing (WDM), and/or the like. In an embodiment, the radio transceiver cards may provide wireless communication links using protocols such as code division multiple access (CDMA), global system for mobile communications (GSM), long-term evolution (LTE), WiFi (IEEE 802.11), Bluetooth, Zigbee, narrowband Internet of things (NB IoT), near field communications (NFC), and radio frequency identity (RFID). The radio transceiver cards may promote radio communications using 5G, 5G New Radio, or 5G LTE radio communication protocols. These network connectivity devices 392 may enable the processor 382 to communicate with the Internet or one or more intranets. With such a network connection, it is contemplated that the processor 382 might receive information from the network, or might output information to the network in the course of performing the above-described method steps. Such information, which is often represented as a sequence of instructions to be executed using processor 382, may be received from and outputted to the network, for example, in the form of a computer data signal embodied in a carrier wave.

Such information, which may include data or instructions to be executed using processor 382 for example, may be received from and outputted to the network, for example, in the form of a computer data baseband signal or signal embodied in a carrier wave. The baseband signal or signal embedded in the carrier wave, or other types of signals currently used or hereafter developed, may be generated according to several methods well-known to one skilled in the art. The baseband signal and/or signal embedded in the carrier wave may be referred to in some contexts as a transitory signal.

The processor 382 executes instructions, codes, computer programs, scripts which it accesses from hard disk, floppy disk, optical disk (these various disk based systems may all be considered secondary storage 384), flash drive, ROM 386, RAM 388, or the network connectivity devices 392. While only one processor 382 is shown, multiple processors may be present. Thus, while instructions may be discussed as executed by a processor, the instructions may be executed simultaneously, serially, or otherwise executed by one or multiple processors. Instructions, codes, computer programs, scripts, and/or data that may be accessed from the secondary storage 384, for example, hard drives, floppy disks, optical disks, and/or other device, the ROM 386, and/or the RAM 388 may be referred to in some contexts as non-transitory instructions and/or non-transitory information.

In an embodiment, the computer system 700 may comprise two or more computers in communication with each other that collaborate to perform a task. For example, but not by way of limitation, an application may be partitioned in such a way as to permit concurrent and/or parallel processing of the instructions of the application. Alternatively, the data processed by the application may be partitioned in such a way as to permit concurrent and/or parallel processing of different portions of a data set by the two or more computers. In an embodiment, virtualization software may be employed by the computer system 700 to provide the functionality of a number of servers that is not directly bound to the number of computers in the computer system 700. For example, virtualization software may provide twenty virtual servers on four physical computers. In an embodiment, the functionality disclosed above may be provided by executing the application and/or applications in a cloud computing environment. Cloud computing may comprise providing computing services via a network connection using dynamically scalable computing resources. Cloud computing may be supported, at least in part, by virtualization software. A cloud computing environment may be established by an enterprise and/or may be hired on an as-needed basis from a third-party provider. Some cloud computing environments may comprise cloud computing resources owned and operated by the enterprise as well as cloud computing resources hired and/or leased from a third-party provider.

In an embodiment, some or all of the functionality disclosed above may be provided as a computer program product. The computer program product may comprise one or more computer readable storage medium having computer usable program code embodied therein to implement the functionality disclosed above. The computer program product may comprise data structures, executable instructions, and other computer usable program code. The computer program product may be embodied in removable computer storage media and/or non-removable computer storage media. The removable computer readable storage medium may comprise, without limitation, a paper tape, a magnetic tape, magnetic disk, an optical disk, a solid state memory chip, for example analog magnetic tape, compact disk read only memory (CD-ROM) disks, floppy disks, jump drives, digital cards, multimedia cards, and others. The computer program product may be suitable for loading, by the computer system 700, at least portions of the contents of the computer program product to the secondary storage 384, to the ROM 386, to the RAM 388, and/or to other non-volatile memory and volatile memory of the computer system 700. The processor 382 may process the executable instructions and/or data structures in part by directly accessing the computer program product, for example by reading from a CD-ROM disk inserted into a disk drive peripheral of the computer system 700. Alternatively, the processor 382 may process the executable instructions and/or data structures by remotely accessing the computer program product, for example by downloading the executable instructions and/or data structures from a remote server through the network connectivity devices 392. The computer program product may comprise instructions that promote the loading and/or copying of data, data structures, files, and/or executable instructions to the secondary storage 384, to the ROM 386, to the RAM 388, and/or to other non-volatile memory and volatile memory of the computer system 700.

In some contexts, the secondary storage 384, the ROM 386, and the RAM 388 may be referred to as a non-transitory computer readable medium or a computer readable storage media. A dynamic RAM embodiment of the RAM 388, likewise, may be referred to as a non-transitory computer readable medium in that while the dynamic RAM receives electrical power and is operated in accordance with its design, for example during a period of time during which the computer system 700 is turned on and operational, the dynamic RAM stores information that is written to it. Similarly, the processor 382 may comprise an internal RAM, an internal ROM, a cache memory, and/or other internal non-transitory storage blocks, sections, or components that may be referred to in some contexts as non-transitory computer readable media or computer readable storage media.

While several embodiments have been provided in the present disclosure, it should be understood that the disclosed systems and methods may be embodied in many other specific forms without departing from the scope of the present disclosure. The present examples are to be considered as illustrative and not restrictive, and the intention is not to be limited to the details given herein. For example, the various elements or components may be combined or integrated in another system or certain features may be omitted or not implemented.

Also, techniques, systems, subsystems, and methods described and illustrated in the various embodiments as discrete or separate may be combined or integrated with other systems, modules, techniques, or methods without departing from the scope of the present disclosure. Other items shown or discussed as directly coupled or communicating with each other may be indirectly coupled or communicating through some interface, device, or intermediate component, whether electrically, mechanically, or otherwise. Other examples of changes, substitutions, and alterations are ascertainable by one skilled in the art and could be made without departing from the scope disclosed herein.

## Claims

1. A method of optimal scanning sequence configuration at reader devices for reader device coordination, wherein the method comprises:
obtaining, by a controller application executing at a controller system, layout data describing a location of a plurality of reader devices in an inventory environment;
determining, by the controller application, key performance indicator data associated with each of the reader devices, wherein the key performance indicator data comprises metrics evaluating at least one of an accuracy of inventory scans performed by each of the reader devices or an interference level experienced in signals received by each of the reader devices;
determining, by the controller application, a profile associated with the signals received by each of the reader devices from one or more tags, wherein the profile defines a set of parameters describing the signals received by each of the reader devices;
identifying, by the controller application, a scanning policy for a reader device of the reader devices based on at least one of the layout data, the key performance indicator data, and the profile of each of the reader devices, wherein the scanning policy indicates a purpose for scanning and one or more scanning rules used to define a scanning sequence for the reader devices;
determining, by the controller application, the scanning sequence for the reader devices based on the scanning policy and at least one of the layout data, the key performance indicator data, and the profile of each of the reader devices; and
instructing, by the controller application, each of the reader devices to scan respective areas in the inventory environment according to the scanning sequence.

2. The method of claim 1, wherein prior to determining, by the controller application, the key performance indicator data associated with each of the reader devices, the method further comprises at least one of:
a) receiving, by the controller application from each of the reader devices, inventory data describing the one or more tags in a respective area scanned by each of the reader devices over a plurality of different frequencies supported by each of the reader devices;
comparing, by the controller application, the inventory data at each of the different frequencies supported by each of the reader devices to identify an optimal frequency for each of the reader devices; and
defining, by the controller application, an inventory parameter for each of the reader devices as the optimal frequency for each of the reader devices;
b) receiving, by the controller application from each of the reader devices, interference data describing an interference level detected over a plurality of different frequencies supported by each of the reader devices;
comparing, by the controller application, the interference data at each of the different frequencies supported by each of the reader devices to identify an optimal frequency for each of the reader devices; and
defining, by the controller application, an interference parameter for each of the reader devices as the optimal frequency for each of the reader devices;
c) receiving, by the controller application from each of the reader devices, positioning accuracy data describing an accuracy of locating each of the one or more tags detected over a plurality of different frequencies supported by each of the reader devices;
comparing, by the controller application, the positioning accuracy data each of the different frequencies supported by each of the reader devices to identify an optimal frequency for each of the reader devices; and
defining, by the controller application, a positioning parameter for each of the reader devices as the optimal frequency for each of the reader devices.

3. The method of claim 1 or 2, wherein the profile describes at least one of a signal strength of a tag, a response latency based on communications with the tag, frequency capabilities of the tag, communication capabilities of the tag, obstructions in an area scanned by the reader device, environmental data describing an environment of a read zone of the reader device. a responsiveness of the tag to different power levels, angles, or distances of the reader device, unique identifiers associated with the tag, or a communication sensitivity levels of the tag.

4. The method of claim 1, 2 or 3, wherein the purpose is for at least one of minimize interference, optimize scanning, or maximize positioning accuracy.

5. An inventory system, comprising:
a reader device; and
a controller system,
wherein the reader device comprises a first application stored in a memory of the reader device, which when executed by a processor of the reader device, causes the first application to be configured to:
scan an area in an inventory environment;
receive signals carrying tag data from a plurality of tags in the area; and
forward the tag data and signal metadata describing the signals to the controller system;
wherein the controller system comprises a controller application stored in a memory of the controller system, which when executed by a processor of the controller system, causes the controller application to be configured to:
determine layout data including a location of the reader device and other reader devices in the inventory environment;
identify a scanning policy for the reader device based on the layout data and key performance indicator data determined based on the signal metadata and the tag data received from the reader device, wherein the scanning policy defines a scanning sequence for the reader device relative to the other reader devices based on one or more conditions associated with the layout data and the key performance indicator data;
determine the scanning sequence for the reader device and the other reader devices based on the scanning policy; and
instruct the reader device and the other reader devices to scan respective areas in the inventory environment according to the scanning sequence.

6. The inventory system of claim 5, wherein the layout data further comprises distance data describing a distance between the reader device and the other reader devices, an angle of the reader device and the other reader devices, an orientation of the reader device and the other reader devices and one or more capabilities of the reader device and the other reader devices.

7. The inventory system of claim 5 or 6, wherein the scanning sequence defines a time frame at which each of the reader device and the other reader devices is to scan the area and a frequency channel over which one or more reader devices is to communicate when scanning the area.

8. The inventory system of any one of claims 5 to 7, wherein the scanning policy is associated with a purpose of the scan, wherein the purpose is for at least one of interference reduction, scan optimization, or maximizing positioning accuracy.

9. The inventory system of any one of claims 5 to 8, wherein the key performance indicator data comprises metrics evaluating at least one of an accuracy of inventory scans performed by the reader device and the other reader devices or an interference level experienced in signals received by the reader device and the other reader devices.

10. A method, comprising:
obtaining, by a controller application executed at a controller system, layout data describing locations of one or more reader devices in an inventory environment;
determining, by the controller application, a scanning sequence of the one or more reader devices based on the layout data and a scanning rule, wherein the scanning sequence defines a time frame at which each of the one or more reader devices is to scan an area, and wherein the scanning rule includes one or more conditions associated with the one or more reader devices that, when satisfied, defines the scanning sequence of the one or more reader devices; and
instructing, by the controller application, each of the one or more reader devices to scan respective read zones in the area according to the scanning sequence to receive signals from a plurality of tags and determine inventory data describing the tags.

11. The method of claim 10, wherein the layout data:
further comprises distance data describing a distance between each of the one or more reader devices, an angle of each of the one or more reader devices, an orientation of each of the one or more reader devices, and one or more capabilities of each of the one or more reader devices; and/or
is obtained periodically according to a trigger event or based on a schedule, wherein the trigger event is a message received from a first reader device having detected that a second reader device is within a predefined distance of the first reader device and communicating over a common frequency channel.

12. The method of claim 10 or 11, wherein the scanning sequence also defines a frequency channel over which one or more reader devices is to communicate when scanning the area.

13. The method of any one of claims 10 to 12, wherein the scanning rule is associated with a scanning policy, wherein the scanning policy defines the scanning rule based on the layout data and a purpose of a scan.

14. The method of any one of claims 10 to 13, wherein the scanning rule:
is associated with a scanning policy having a purpose of minimizing interference, wherein the scanning rule includes logic to ensure that reader devices within a predefined distance from one another do not perform scans over a common frequency channel; or
is associated with a scanning policy having a purpose of maximizing tag location accuracy, wherein the scanning rule includes logic to instruct three adjacent reader devices to scan a common read zone over a common frequency channel to receive signals from a tag and use signal metadata describing the signals to perform triangulation or trilateration to determine a location of the tag.

15. The method of any one of claims 10 to 14, further comprising:
obtaining, by the controller application, key performance indicator data describing each of the one or more reader devices based on the signals received from each of the tags and the inventory data detected in each of the respective read zones, wherein the scanning rule is further based on the key performance indicator data; and
obtaining, by the controller application, one or more profiles for one or more of the tags, the one or more reader devices, or each respective read zone based on the key performance indicator data, signal metadata describing the signals received from the tags, and the inventory data detected in each respective read zone.
